# NEUE EUROPÄISCHE PATENTSCHRIFT

(11) **EP 1 974 892 B2**
(45) Veröffentlichungstag und Bekanntmachung des Hinweises auf die Entscheidung über den Einspruch: **22.12.2021**
(45) Hinweis auf die Patenterteilung: 15.08.2018
(21) Anmeldenummer: 08002792.3
(22) Anmeldetag: 15.02.2008
(51) Int. Cl.: B29C 49/78

(54) **Verfahren zum Blasformen**
Method for blow moulding
Procédé destiné au moulage par soufflage

(30) Priorität: 29.03.2007 DE 102007015105
(43) Veröffentlichungstag der Anmeldung: 01.10.2008
(73) Patentinhaber: Krones Aktiengesellschaft, 93073 Neutraubling (DE)
(72) Erfinder: Detrois, Christian, Dr., 88190 Golbey (FR)
(74) Vertreter: Grünecker Patent- und Rechtsanwälte PartG mbB

(56) Entgegenhaltungen:
- EP-A1- 1 777 056
- EP-A2- 1 905 569
- WO-A1-2007/023349
- DE-A1-102004 014 653
- JP-A- H11 207 808

## Beschreibung

Die Erfindung bezieht sich auf eine Vorrichtung wie bekannt aus JP H11 207808 A.

Verfahren zum Blasformen, bei denen vorgefertigte Preforms in einer Form durch Erwärmen und Einblasen von Druckgas expandiert werden, sind beispielsweise aus der US 4,488,863, der DE 10 2004 014 653, der EP 1 328 396 oder der DE 31 11 925 bekannt. Die meisten Blasformverfahren arbeiten mit einer Vorblas- und einer Fertigblas-Druckstufe. In der Vorblas-Druckstufe erfolgt zunächst ein erster Anstieg des Blasdruckes, gefolgt von einer Druckentlastung, wenn sich der Preform ausdehnt. Anschließend wird der Druck auf den wesentlich höheren Fertigblasdruck von beispielsweise 40 bar erhöht, bis der Preform auf die gewünschte Endform des Kunststoffhohlkörpers gebracht wurde. Anschließend wird der Kunststoffhohlkörper vom Druck entlastet und aus der Form entnommen.

Es sind bereits Anstrengungen unternommen worden, den Verbrauch von Druckgas beim Blasformen zu verringern, indem zumindest ein Teil des Druckgases nach der Druckentlastung abgeleitet und einer Weiterverwendung zugeführt wird. So wird beispielsweise in der US 4,488,863 das Druckgas der Fertigblasstufe nach dem Fertigblasen so lange einem Speicher für die Druckversorgung der Vorblasstufe zugeführt, solange der Druck des rückgeführten Druckgases noch über der Druckanforderung für die Vorblasstufe liegt. Der Rest des Druckgases geht über einen Schalldämpfer in die Atmosphäre. Da jedoch der Druck in der Vorblasstufe relativ niedrig ist, ist die Recycling-Kapazität dieser Lösung begrenzt.

Die DE 31 11 925 schlägt vor, die Druckluft nach dem Formvorgang, ggf. nach einer Zwischenspeicherung anderen Verbrauchern zuzuführen.

Das gleiche Konzept wird beim Verfahren und der Vorrichtung nach der DE 10 2004 014 653 verfolgt. Die dort nach dem Fertigblasschritt entlüftete Druckluft wird zum Teil in einen Arbeitsspeicher überführt, und, nach Unterschreiten des Drucks für den Arbeitsspeicher, über einen Schalldämpfer in die Atmosphäre entlassen. Die für diese Zwecke verwendete Vorrichtung enthält einen Ventilblock zur Versorgung der Blasdüse einer Blasform, in dem eine Mehrzahl von Einzelventilen zusammengefasst sind. Es ist ein erstes Ventil vorgesehen, das mit einem Vorblasspeicher verbunden ist, der das Druckgas für die Vorblasstufe bereitstellt. Der Vorblasspeicher wird über einen Druckminderer vom Fertigblasspeicher mit Druckgas versorgt. Der Fertigblasspeicher wiederum ist mit einer Druckgasquelle und einem eigenen Ventil im Ventilblock verbunden, das die Blasdüse mit dem Fertigblasspeicher verbindet. Bei dem in dieser Druckschrift beschriebenen Verfahren ist neben dem Vor- und dem Fertigblasen eine dritte Druckstufe vorgesehen, in der der Druck über den Druck des Fertigblasens erhöht wird um das Ausprägen der Konturen der Form des Hohlkörpers zu verbessern. Gleichzeitig wird damit die Wandung des Hohlkörpers gekühlt. Ist diese Phase beendet, so wird das Druckgas aus dieser Fertigungsstufe einerseits zum Auffüllen des Fertigblasspeichers verwendet und andererseits dem Arbeitsluftspeicher zugeführt, der Arbeitsluft für andere Verbraucher bereitstellt. Der Rest geht über den Schalldämpfer in die Atmosphäre.

Schließlich beschreibt die EP 1 328 396 eine Blasmaschine mit einem Ventilkopf zur Versorgung einer Blasdüse, der pro Blasdüse mit vier Ventilen bestückt ist, und zwar einem Vorblasventil, einem Fertigblasventil und zwei Entlüftungsventilen. Auch hier erfolgt der Druckaufbau zum Fertigblasen in nur einem Schritt.

Bei allen bekannten Verfahren und Vorrichtungen besteht jedoch das Problem, dass immer noch zu viel Drucklgas, insbesondere aus der Fertigblasstufe, verloren geht, insbesondere dann, wenn keine weiteren Druckluftverbraucher in der näheren Umgebung der Blasformmaschine vorhanden sind, die mit der recycelten Druckluft versorgen werden könnten.

Der Erfindung liegt somit die Aufgabe zu Grunde, ein Verfahren und eine Vorrichtung zum Blasformen von Kunststoffhohlkörpern bereitzustellen, die eine wesentlich höhere Recyclingrate für Druckluft ermöglichen.

Die Aufgabe wird durch die Vorrichtung gemäß Anspruch 1 gelöst. Durch die erfindungsgemäße Ausgestaltung wird der Druckaufbau in der Fertigblasstufe kaskadenartig in einzelne Schritte unterteilt, was es gestattet, auch das Druckgas der vorangegangenen Fertigblasstufe, das naturgemäß nach den Fertigblasen einen verringerten Druck aufweist, im Wesentlichen vollständig zu recyceln und zum Druckaufbau der Fertigblasstufe für den nachfolgende Kunststoffhohlkörper zu verwenden, ohne dass die Fertigungsgeschwindigkeit verringert würde. Erfindungsgemäß erfolgt die Rückgewinnung des Druckgases durch eine ebenfalls kaskadenartig in Schritten durchgeführte Druckentlastung, die bevorzugt so durchgeführt wird, dass jeweils ein Druckentlastungsschritt einem Druckaufbauschritt, zweckmäßigerweise dem mit dem nächst niedrigen Nenn-Druck, dient.

Durch die in die nächst niedrigere Druckstufe des Druckaufbaus erfolgende Druckentlastung ist es lediglich erforderlich, die dem höchsten Druckniveau entsprechende Druckstufe aus einer externen Druckgasquelle aufzufüllen, was gleichzeitig mit dem Recyceln des Druckgases aus den Entlastungsstufen erfolgen kann, so dass die Fertigungsgeschwindigkeit nicht negativ beeinflusst wird.

Bevorzugt wird das erfindungsgemäße Prinzip des kaskadenartigen Druckaufbaus auch auf die Vorblasstufe übertragen, wobei die Vorblasstufe alternativ entweder als erster Druckaufbauschritt ausgebildet und somit in den Druckaufbau der Fertigblasstufe integriert wird, oder analog der Fertigblasstufe mehrere Druckaufbauschritte, wobei beispielsweise der letzte Druckentlastungsschritt der Fertigblasstufe dem Druckaufbau der Vorblasstufe dienen kann, und bevorzugt auch mehrere Druckentlastungsschritte aufweist.

Zur Durchführung des erfindungsgemäßen Verfahrens, sind nur geringfügige Modifizierungen an herkömmlichen Blasformmaschinen vorzunehmen, so dass auch eine Umrüstung herkömmlicher Blasformmaschinen möglich ist. So muss lediglich der bislang verwendete einzige Fertigblasspeicher durch eine entsprechende Anzahl Einzelspeicher ersetzt werden, wobei jedem Einzelspeicher eine Druckstufe im Bereich des Fertigblasdruckes zugeordnet ist. Weiterhin muss die Ventilanordnung sicherstellen, dass jeder Einzelspeicher mit der Blasdüse gesteuert in Verbindung gebracht werden kann, und zwar sowohl für einen Einlass als auch für einen Auslass.

Der der höchsten Druckstufe zugeordnete Einzelspeicher sollte bevorzugt direkt von einer Druckgasquelle versorgt werden, wodurch auch unvermeidliche Druckverluste ausgeglichen werden.

Die anderen Einzelspeicher werden bevorzugt vom ersten Einzelspeicher befüllt, was zweckmäßigerweise dadurch geschieht, dass die Einzelspeicher benachbarter Druckstufen über Druckminderer miteinander verbunden sind.

Ein Ausführungsbeispiel der Erfindung wird nachfolgend anhand der Zeichnungen näher erläutert. Es zeigen:
Fig. 1 eine diagramartige Darstellung des beschriebenen Verfahrens,
Fig. 2 ein Ventilschaltplan der Fig. 1, und
Fig. 3 eine stark schematisierte Darstellung einer erfindungsgemäß ausgebildeten Vorrichtung.

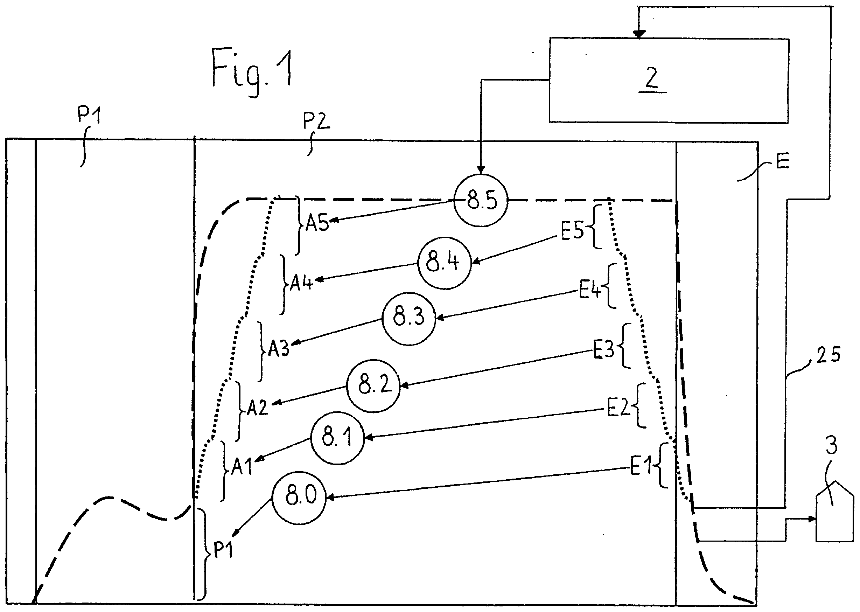

Figur 1 zeigt ein Druck-Zeit-Diagramm eines Blasformvorgangs zum Herstellen eines Kunststoffhohlkörpers, insbesondere eines Kunststoffhohlkörpers 5, bevorzugt einer Kunststoffflasche. Wie anhand des Standes der Technik erläutert, wird beim Blasformen von Kunststoffhohlkörpern 5 ein so genannter Preform, d. h. ein vorgefertigtes Vorprodukt, in eine Blasform eingesetzt und durch Anwendung von Wärme und Einblasen von Druckgas, bevorzugt Druckluft, sowie ggf. unter Anwendung mechanischer Reckeinrichtungen, wie beispielsweise einer Reckstange, so aufgebläht, dass das Material sich an die Formwände der Blasform anlegt, und dadurch in seiner Außenkontur bestimmt wird, und dass sich im Inneren unter Beibehaltung einer vorbestimmten Wanddicke ein Hohlraum ausbildet.

Vorzugsweise ist die Blasdüse 6 so ausgebildet, dass sie mindestens einen Durchlass aufweist, in dem zumindest die Reckstange hindurchgeführt werden kann. Vorzugsweise ist ein Durchlass vorgesehen, durch den sowohl Blasluft, als auch die Reckstange hindurchgeführt werden können.

Das Blasformen wird bevorzugt in zumindest zwei Druckstufen vorgenommen, zum einen in eine Vorblasstufe p1 mit einem geringeren Druck und, bevorzugt direkt anschließend, mit einer Fertigblasstufe p2 mit einem höheren Druck. Der Druck der Vorblasstufe p1 liegt zwischen 2 bis 20 bar und das Fertigblasen p2 wird bei einem Druck zwischen 10 bis 45 bar durchgeführt, wobei die Druckhöhen und die Haltezeiten auf die Größe der Hohlkörper 5 und das verwendete Material usw. abgestimmt werden. Anschließend wird der Druck entlastet und der Hohlkörper 5 aus der Blasform entnommen und ein neuer Preform in die Blasform für ein neues Blasformverfahren eingesetzt.

Wie Figur 1 zeigt, wird der Vorblasdruck p1 in herkömmlicher Weise durch eine Druckerhöhung in einem einzigen Schritt erreicht. Beim Fertigblasen jedoch wird der Fertigblasdruck p2, wie die ausgezogene Linie in Figur 1 zeigt, in einer Mehrzahl von kaskadenartigen Schritten erreicht. Im dargestellten Ausführungsbeispiel sind fünf Druckaufbauschritte A1 bis A5 dargestellt, es können jedoch auch mehr als fünf oder nur zwei Schritte sein. Zum Vergleich zeigt die gestrichelte Linie den herkömmlichen Druckaufbau auf p2 in einem Schritt. In jedem Schritt A1 bis A5 wird der Druck bevorzugt um den gleichen Wert Δp erhöht, bis die für diesen Schritt vorgegebene Druckstufe erreicht ist. Im dargestellten Ausführungsbeispiel wird zum Erreichen einer Fertigblasstufe p2 von 40 bar der Druck in jedem Druckaufbauschritt (A1...A5) um 8 bar erhöht, so dass durch den Schritt A1 8 bar, durch A2 16 bar, durch A3 24 bar, durch A4 32 bar und A5 schließlich 40 bar erreicht werden.

In der Entlastungsphase E nach Abschluss des Formvorganges, erfolgt die Druckentlastung ebenfalls wieder in kaskadenartigen Schritten E5 bis E1, wobei bevorzugt die gleiche Anzahl Druckentlastungsschritte wie Druckaufbauschritte vorgesehen sind. Demgemäß führt jeder Schritt eine Druckentlastung von ebenfalls jeweils 8 bar durch, wobei die durch die Schritte erzielbaren Entlastungsstufen bei E5 32 bar, bei E4 24 bar, bei E3 16 bar, bei E2 8 bar und bei E1 p1 betragen. Das Druckgas jedes Entlastungsschrittes E5 bis E1 wird für den Aufbau des Drucks in einer Druckaufbaustufe recycelt. Im dargestellten Ausführungsbeispiel dient jeder Entlastungsschritt (E5...E1) dem Druckaufbau einer darunter liegenden Druckaufbaustufe (A1...A4), wobei beispielsweise im Entlastungsschritt E5 beim Entlasten des Druckes von 40 bar auf 32 bar das dadurch entlastete Druckgas zum Aufbau des Druckes im Druckaufbauschritt A4 von 24 auf 32 bar verwendet wird. In gleicher Weise wird die Druckentlastung von 32 bar auf 24 bar im Entlastungsschritt E4 zum Aufbau des Druckes im Druckaufbauschritt A3 von 16 bar auf 24 bar eingesetzt und dies bis zum Entlastungsschritt E2 wiederholt. Der letzte Entlastungsschritt E1, d. h. die Entlastung zwischen 8 bar und p1 dient zum Aufbau des Vorblasdruckes p1.

Bei dieser Vorgehensweise muss lediglich die höchste Druckaufbaustufe im Schritt A5 durch eine externe Druckgasquelle 2 aufgefüllt werden. Der Restdruck unterhalb E1 wird entweder in herkömmlicher Art und Weise in die Umgebung entlassen, bevorzugt über einen Schalldämpfer 3, oder kann zum Betreiben anderer Einrichtungen, wie z.B. von Niederdruckanwendungen verwendet werden. Auch ist eine Rückführung 25 in die Druckgasquelle 2 denkbar, die z.B. als Kompressor mit mehreren Druckstufen aufgebaut sein kann, wobei die Rückführung z.B. zwischen zwei Druckstufen erfolgen kann.

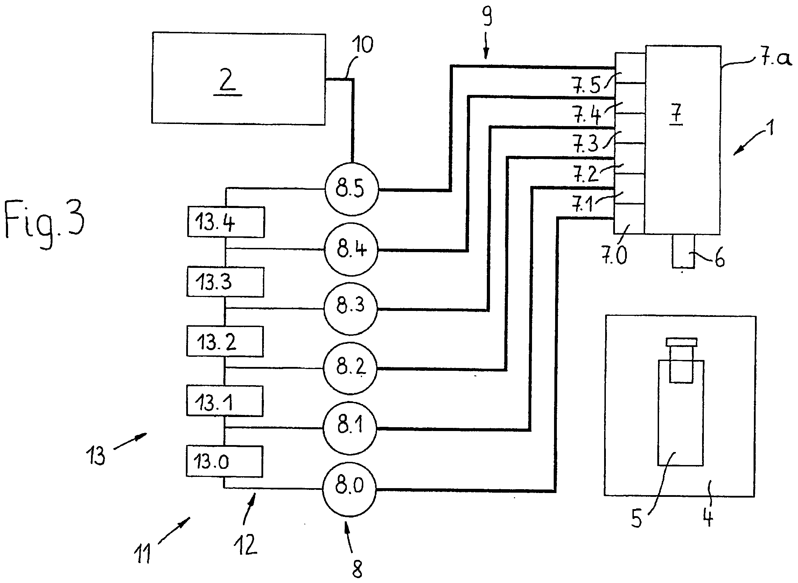

Die zum Durchführen des Verfahrens verwendete Vorrichtung 1 ist in äußerst schematisierter Darstellung in Fig. 3 näher dargestellt. Die Vorrichtung 1 enthält die bereits erwähnte Druckgasquelle 2, die beispielsweise ein Kompressor sein kann. In Fig. 3 ist weiterhin eine herkömmliche Blasform 4 dargestellt, in der sich ein bereits fertiggestellter Kunststoffhohlkörper 5, beispielsweise eine Kunststoffflasche befindet, die mit Hilfe einer Blasdüse 6 herkömmlicher Art blasgeformt wurde. Die Blasdüse 6 wird über eine insgesamt mit 7 bezeichnete Ventilanordnung mit dem Druckgas unter vorbestimmtem Druck und vorbestimmtem Druckverlauf versorgt. Das Druckgas stammt aus einer Speicheranordnung 8, die über die Druckgasquelle 2 mit Druckgas versorgt wird und mit der Ventilanordnung 7 über eine Leitungsverbindung 9 zur Versorgung der Blasdüse 6 verbunden ist. Die Speicheranordnung 8 enthält einen Vorblasspeicher 8.0, der den Druck der Vorblasstufe p1 bereitstellt. Die bislang beschriebenen Merkmale sind herkömmlicher Art, so dass auf das Wissen des Durchschnittsfachmannes verwiesen werden kann.

Erfindungsgemäß enthält die Speicheranordnung 8 eine Mehrzahl von Fertigblasspeichern 8.1 bis 8.5, die gemeinsam den Fertigblasdruck p2 bereitstellen. Jeder Fertigblasspeicher 8.1 bis 8.5 entspricht einer der durch die Schritte A1 bis A5 zu erreichenden Druckstufen, wobei der Speicher 8.1 einen Druck von 8 bar, der Speicher 8.2 einen Druck von 16 bar, der Speicher 8.3 einen Druck von 24 bar, der Speicher 8.4 einen Druck von 32 bar und der Speicher 8.5 einen Druck von 40 bar bereitstellt. Jeder Speicher der Speicheranordnung 8 kann von herkömmlicher Konstruktion sein, und ist beispielsweise als Behälter oder bevorzugt als Ringkanal ausgebildet.
Jeder der Speicher (8.0...8.5) ist jeweils über eine eigene Ventileinrichtung oder eine eigene Ventilstellung 7.0 bis 7.5 mit der Blasdüse 6 verbunden. Zumindest die Ventile 7.0 bis 7.4 sind Einlass- und Auslassventile, d. h. sie gestatten sowohl eine Förderrichtung vom entsprechenden Speicher 8.0 bis 8.4 zur Blasdüse 6 als auch umgekehrt, d. h. von der Blasdüse 6 zum entsprechenden Speicher 8.0 bis 8.4. Das dem ersten, druckhöchsten Speicher 8.5 zugeordnete Ventil 7.5 muss lediglich eine Förderrichtung vom Speicher 8.5 zur Blasdüse 6 gestatten, während die Rückführung des Blasdrucks in den druckhöchsten Speicher 8.5 gesperrt sein kann. Es können z. B. für jede Aufgabe eigene Ventile vorgesehen werden, oder ein Ventil (Kolbenventil oder Drehventil) eingesetzt werden, das nacheinander die Druckniveaus freigibt. Erfindungsgemäß ist die Ventilsteuerung magnetisch oder servomotorisch. Der druckhöchste Speicher 8.5 ist bevorzugt über eine Leitung 10 direkt mit der Druckgasquelle 2 verbunden und wird von der Druckgasquelle 2 befüllt. Alle anderen Speicher 8.0 bis 8.4 werden dann durch das aus der Druckentlastung eines Blasformvorganges rückgewonnene Druckgas befüllt.
Für eine erste Füllung und ggf. einem Ersatz eines nicht planmäßigen Druckverlustes ist weiterhin eine Befülleinrichtung 11 vorgesehen, die es gestattet, auch die Speicher 8.0 bis 8.4 mit extern herangeführtem Druckgas zu befüllen. Die Befülleinrichtung 11 gestattet eine Befüllung über den ersten, druckhöchsten Speicher 8.5 über Verbindungsleitungen 12 in jeden druckniederen Speicher 8.0 bis 8.4, in denen jeweils Druckminderer 13 vorgesehen sind. Jeder der Druckminderer 13 verringert den von der Druckgasquelle 2 bereitgestellten Druck auf den Nenn-Druck des jeweils im Druck darunter liegenden Speichers 8.0 bis 8.4, d. h. der Druckminderer 13.4 vermindert den Druck auf den Nenn-Druck des Speichers 8.4, der Druckminderer 13.3 vermindert auf den Nenn-Druck des Speichers 8.3 usw., bis der Druckminderer 13.0 den angelieferten Druck auf den Nenn-Druck des Druckspeichers 8.0, d. h. auf p1 verringert.

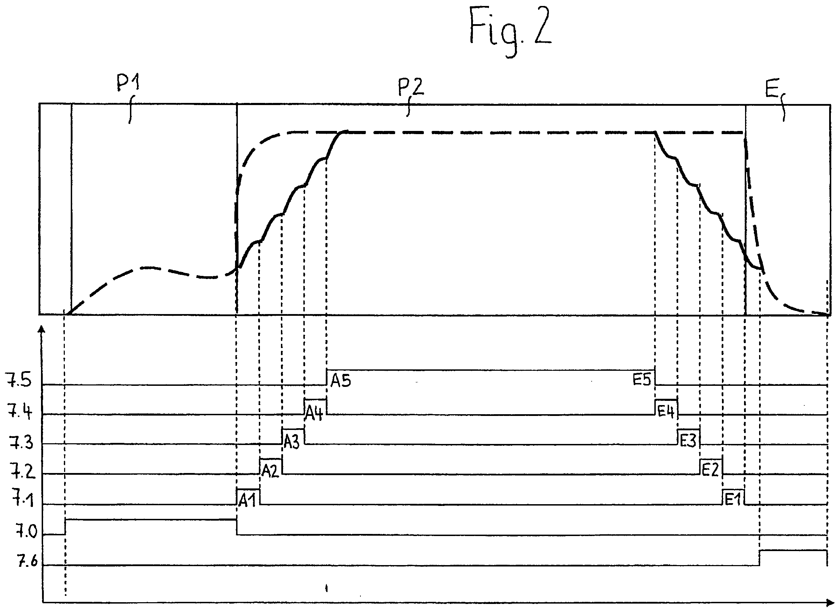

Figur 2 zeigt den Schaltplan der Ventile 7.0 bis 7.6 kombiniert mit dem Druck-Zeit-Diagramm gemäß Figur 1. Zu Beginn des Blasvorganges wird zunächst das Ventil 7.0 geöffnet und verbindet den Speicher 8.0 mit der Blasdüse 6 zum Bereitstellen des Vorblasdruckes p1. Dann werden nacheinander die Ventile 7.1 bis 7.5 geöffnet und nach dem Erreichen des maximalwertes der jeweiligen Druckstufe oder nach einer bestimmten Zeit wieder geschlossen, um kaskadenartig schrittweise den Fertigblasdruck p2 aufzubauen, der dann, wie üblich, über die erforderliche Zeit gehalten wird. Erfindungsgemäß erfolgt die Druckentlastung kaskadenartig in Schritten mit den gleichen Δp wie der Druckaufbau, wobei nunmehr die Auslassstelle oder das Auslassventil des entsprechenden Ventils 7.5 bis 7.1 verwendet wird, um das aus der Blasdüse 6 entlastete Druckgas wieder in die Speicheranordnung 8 zurückzuführen, und den Druck in der Speicheranordnung 8 für den nächsten Blasvorgang wieder aufzufüllen; diesmal jedoch in der nächst niedrigeren Druckstufe, während die höchste Druckstufe des Speichers 8.5 durch eine geeignete Ventilsteuerung mit der Druckgasquelle 2 verbunden wird. Der unter p1 liegende Druck wird anschließend, wie Figur 1 zeigt, in die Umgebung entlassen, bevorzugt über den Schalldämpfer 3 oder - zumindest teilweise - zur Druckgasquelle 2 zurückgeführt, indem das Entlastungsventil 7.6 geöffnet wird. Die Ventile sind vorzugsweise um den sogenannten Ventilblock 7.a angeordnet, der Bohrungen aufweist und somit die Ventile 7.0 bis 7.6 mit der Blasdüse 6 verbindet. Auf diese Weise wird ein sehr geringes Totraumvolumen erreicht.

In Abwandlung des beschriebenen und gezeichneten Ausführungsbeispiels ist es jedoch auch möglich, den Vorblasdruck p1 in kaskadenartigen Schritten aufzubauen und zum Auffüllen des Drucks p1 den in Figur 1 in der Atmosphäre entlassenen Anteil des Druckgases zu verwenden. Die kaskadenartige Ausgestaltung des Vorblasens p1 erfolgt in gleicher Weise wie anhand des Fertigblasens beschrieben, d.h. mit einem eigenen Speicher pro Druckaufbaustufe und einer entsprechend zugeordneten, eigenen Ventileinrichtung. Die Vorblasstufe kann jedoch auch komplett separat versorgt werden, wie dies bislang auch im Stand der Technik bereits praktiziert wurde.

Die erfindungsgemäße Ausgestaltung bietet weiterhin eine sehr einfache Möglichkeit, die Druckhöhen der erfindungsgemäß ausgebildeten Blasstufen, d. h. insbesondere der Fertigblasstufe p2 zu variieren, indem einfach der druckhöchste Schritt oder einige der Schritte unwirksam geschaltet werden. Auch eine proportionale Verkleinerung oder Vergrößerung der Druckerhöhungen pro Schritt ist auf einfache Weise möglich. Schließlich kann mit der erfindungsgemäßen Ausgestaltung nicht nur der gezeigte lineare Druckanstieg verwirklicht werden, vielmehr kann durch Veränderung von Δp der Anstieg entweder steiler oder flacher ausgebildet oder ein nicht-proportionaler oder unregelmäßiger Verlauf verwirklicht werden, z. B. 10, 15, 20, 30, 40 bar. Es ist weiterhin möglich, nur den Druckanstieg in Schritten vorzunehmen, während die Druckentlastung in gleicher Weise über Druckminderer erfolgt, wie dies bei der Erstbefüllung über die Befülleinrichtung beschrieben wurde. Schließlich kann jeder Einzelspeicher, wiederum über eine Druckentlastung direkt mit der Druckgasquelle verbunden sein, oder bei erhöhtem Druckverlust zwei oder noch mehr der Speicher von vornherein für eine direkte Befüllung durch die Druckgasquelle ausgebildet sein.

## Patentansprüche

1. Vorrichtung (1) zum Blasformen von Kunststoffhohlkörpern (5), wobei unter Verwendung eines Druckgases in einer Fertigblasstufe (p2) ein vorbestimmter Blasdruck aufgebaut und nachfolgend entlastet wird, und wobei der Druckaufbau in der Fertigblasstufe (p2) kaskadenartig in Schritten (A1, A2, A3, A4, A5) erfolgt,
mit einer Druckgasquelle (2), die mit einer Fertigblas-Speicheranordnung (8) verbunden ist, und mit einer Blasdüse (6), die über eine Ventilanordnung (7) mit der Fertigblas-Speicheranordnung (8) zur Versorgung der Blasdüse (6) mit Druckgas unter einem vorbestimmten Druck verbunden ist,
wobei die Fertigblas-Speicheranordnung (8) eine Mehrzahl Einzelspeicher (8.1, 8.2, 8.3, 8.4, 8.5) enthält, wobei jeder Einzelspeicher eine Gasdruckstufe mit einem vorbestimmten Nenn-Gasdruck repräsentiert und mit der Druckgasquelle (2) sowie, über die Ventilanordnung (7), mit der Blasdüse (6) verbunden ist, wobei die Ventilanordnung (7) jeweils ein Ein- und Auslassventil (7.1, 7.2, 7.3, 7.4) für den Einzelspeicher aufweist, und wobei eine magnetisch oder servomotorisch erfolgende Ventilsteuerung vorhanden und derart ausgebildet ist, dass die Druckentlastung in Schritten (E5, E4, E3, E2, E1) mit den gleichen Druckunterschieden (Δp) wie der Druckaufbau erfolgt,
wobei die Druckgasquelle (2) mit einem ersten Einzelspeicher (8.5) direkt verbunden ist, und wobei jeder der anderen Einzelspeicher (8.1, 8.2, 8.3, 8.4) mit einem Einzelspeicher (8.1... 8.5) einer benachbarten Druckstufe über einen Druckminderer (13) verbunden ist.

2. Vorrichtung nach Anspruch 1, wobei die anderen Einzelspeicher (8.1, 8.2, 8.3, 8.4) vom ersten Einzelspeicher (8.5) befüllbar sind.

## Claims

1. Device (1) for blow moulding plastics hollow bodies (5), wherein a specified blowing pressure is built up and subsequently relieved using a compressed gas, in a completion blowing stage (p2), the pressure build-up in the completion blowing stage (p2) occurring in a cascaded manner in steps (A1, A2, A3, A4, A5),
comprising a compressed gas source (2) that is connected to a completion blowing accumulator assembly (8), and comprising a blowing nozzle (6) that is connected to the completion blowing accumulator assembly (8) by means of valve assembly (7) in order to supply the blowing nozzle (6) with compressed gas at a specified pressure,
wherein the completion blowing accumulator assembly (8) contains a plurality of individual accumulators (8.1, 8.2, 8.3, 8.4, 8.5), wherein each individual accumulator represents a gas pressure stage having a specified nominal gas pressure and is connected to the compressed gas source (2) and, via the valve assembly (7), to the blowing nozzle (6), wherein the valve assembly (7) in each case comprises an inlet and an outlet valve (7.1, 7.2, 7.3, 7.4) for the individual accumulator, and wherein magnetic or servomotor-driven valve control is provided and is designed such that the pressure relief occurs in steps (E5, E4, E3, E2, E1) of the same pressure differences (Δp) as the pressure build-up,
wherein the pressurised gas source (2) is directly connected to a first individual accumulator (8.5), and wherein each of the other individual accumulators (8.1, 8.2, 8.3, 8.4) is connected, by means of a pressure reducer (13), to an individual accumulator (8.1...8.5) of an adjacent pressure stage.

2. Device according to claim 1, wherein the other individual accumulators (8.1, 8.2, 8.3, 8.4) can be filled from the first individual accumulator (8.5)

## Revendications

1. Dispositif (1) pour moulage par soufflage de corps creux en plastique (5), en particulier de bouteilles en plastique, dans lequel en utilisant un gaz sous pression dans un niveau de soufflage de finition (p2), une pression de soufflage prédéterminée monte puis est relâchée, dans lequel la montée pression dans le niveau de soufflage de finition (p2) se produit en cascade au cours d'étapes (A1, A2, A3, A4, A5),
avec une source de gaz comprimé (2) qui est reliée à un agencement de stockage de soufflage de finition (8), et avec une buse de soufflage (6), qui est reliée via un agencement de soupapes (7) au dispositif de stockage de soufflage de finition (8) pour alimenter la buse de soufflage (6) avec du gaz comprimé sous une pression prédéterminée,
dans lequel l'agencement de stockage de soufflage de finition (8) comprend une pluralité de dispositifs de stockage individuels (8.1, 8.2, 8.3, 8.4, 8.5), dans lequel chaque dispositif de stockage individuel représente un niveau de pression de gaz avec une pression de gaz nominale prédéterminée, et est relié à la source de gaz comprimé (2) ainsi qu'à la buse de soufflage (6) par l'intermédiaire de l'agencement de soupapes (7), dans lequel l'agencement de soupapes (7) comprend dans chaque cas une soupape d'entrée et une soupape de sortie (7.1, 7.2, 7.3, 7.4) pour le dispositif de stockage individuel, et dans lequel une commande de soupape survenant magnétiquement ou par servomoteur disponible existe et est réalisée de telle sorte que la décompression au cours des étapes (E5, E4, E3, E2, E1) survient avec les mêmes différences de pression (Δp) que la montée en pression,
dans lequel la source de gaz comprimé (2) est reliée directement à un premier dispositif de stockage individuel (8.5), et dans lequel chacun des autres dispositifs de stockage individuels (8.1, 8.2, 8.3, 8.4) est relié à un dispositif de stockage individuel (8,1 ... 8,5) d'un niveau de pression voisin par l'intermédiaire d'un réducteur de pression (13).

2. Dispositif selon la revendication 1, dans lequel les autres dispositifs de stockage individuels (8.1, 8.2, 8.3, 8.4) peuvent être remplis à partir du premier dispositif de stockage individuel.
